(19) Europäisches Patentamt
European Patent Office
Office européen des brevets

(11) Publication number: **0 013 512**
**B1**

(12) **EUROPEAN PATENT SPECIFICATION**

(45) Date of publication of patent specification: **11.08.82**

(51) Int. Cl.³: **C 08 B 37/08**

(21) Application number: **79303066.9**

(22) Date of filing: **28.12.79**

# (54) Methods for preparing a carboxyalkylated chitin and a de-acetylated derivative thereof.

(30) Priority: **29.12.78 JP 161391/78**

(43) Date of publication of application:
**23.07.80 Bulletin 80/15**

(45) Publication of the grant of the patent:
**11.08.82 Bulletin 82/32**

(84) Designated Contracting States:
**DE FR GB IT NL SE**

(56) References cited:
**BE - A - 453 979**
**BE - A - 455 503**

(73) Proprietor: **KUREHA KAGAKU KOGYO KABUSHIKI KAISHA**
**8 Horidome-cho, 1-chome Nihonbashi**
**Chuo-ku Tokyo (JP)**

(72) Inventor: **Koshugi, Junichi**
**No. 22 Daiichi-Kurehasoh**
**3-10-13 Nerima Nerima-ku Tokyo (JP)**

(74) Representative: **Myerscough, Philip Boyd et al,**
**J.A.Kemp & Co. 14, South Square Gray's Inn**
**London, WC1R 5EU (GB)**

**EP 0 013 512 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Methods for preparing a carboxyalkylated chitin and a de-acetylated derivative thereof

The present invention relates to a method for preparing carboxyalkylated and de-acetylated, carboxyalkylated derivatives of chitin.

Chitin is a mucopolysaccharide found in large quantities in crustaceans and insects. Although chitin is potentially a useful substance, owing to its chemical resistance due to its stable crystalline structure, it has no good solvents and so it has very few actual applications. Dichloroacetic acid, sulfuric acid or formic acid can act as solvents for chitin but these solvents decompose chitin and thus reduce its molecular weight. Handling of such chitin solutions is also troublesome because the solvents concerned can pose pollution problems. Thus it is desired to find a derivative of chitin which is soluble in a simple solvent, for instance water or an aqueous solution of an acid, an alkali or a neutral salt, and consequently, will be easier to handle and have increased industrial usefulness.

Hitherto, carboxyalkylation has been employed to prepare a water-soluble derivative of chitin. One of the better carboxyalkylation procedures is that of Trujillo (Carbohydro. Res. 7, 483, 1968). According to Trujillo, a sodium salt of carboxymethylated chitin can be prepared as follows. A mixture of chitin and dimethyl-sulfoxide (DMSO) is left to stand for one day. The mixture is then crushed to a pulp and, after removing an excess DMSO, the pulp is washed with ethanol and dried. The dried substance is crushed into powder and is added to a very concentrated aqueous sodium hydroxide solution. After agitating and filtering the mixture, the cake-like residue is pressed to remove an excess sodium hydroxide. This chitin cake is added to a mixture of isopropyl alcohol and chloroacetic acid under agitation. After agitating well, the mixture is filtered. The whole filtrate is neutralized and the neutralized filtrate is passed through a filter packed with glasswool. Acetone is added to the thus treated filtrate and the deposited sodium salt of carboxymethylated chitin is collected by filtration, washed with ethanol and then dried. However, this method is not commercially practical because of the numerous pre-treatments required to produce the carboxymethylated chitin. Another disadvantage is the difficulty of etherification because of the insufficient dissociation of micells of chitin crystallisate.

Belgian Patent Specifications Nos. 455503 and 453979 disclose a technique for the manufacture of chitin carboxyalkylethers wherein chitin, including a chitin-containing material, is first contacted with a concentrated aqueous alkali solution and then reacted with a halogenoalkylcarboxylic acid or a salt thereof at low temperatures.

As a result of studying the carboxyalkylation of chitin using etherifying agents under conditions which cause the chitin micells to swell, it has been discovered that:

(1) by freezing a highly concentrated aqueous alkali solution containing chitin, the micells of chitin swell and thus enable carboxyalkylation to be easily effected subsequently,

(2) the pre-treatment steps of filtering the aqueous alkali solution and of pressing the filtration-residue to remove excess sodium hydroxide are unnecessary, and

(3) the addition of an etherifying agent in an organic solvent to the frozen chitin-containing alkali with agitation carboxyalkylates the chitin at a high yield.

Accordingly, the present invention provides a method of preparing a carboxyalkylated chitin by:

(i) immersing chitin in an aqueous alkali solution of a normality of from 10 to 15, the amount of said aqueous alkali solution being 3 to 5 times by weight the amount of chitin, and freezing said aqueous alkali solution containing chitin; and

(ii) dispersing the frozen mixture obtained from step (i) in an organic solvent containing an etherifying agent of formula:

$$X(CH_2)_nCOOH$$

wherein X represents chlorine or bromine, and n denotes an integer of 1, 2 or 3, thereby to etherify hydroxyl groups of the chitin.

The invention also provides a method of preparing de-acetylated derivative from the resultant carboxyalkylated chitin by contacting the carboxyalkylated chitin with an aqueous alkali solution, thereby to deacetylate the carboxyalkylated chitin.

The chitin used as a starting material in the present invention can be obtained by any suitable method from natural substances which contain it. After crushing the chitin, it is immersed in an aqueous alkali solution having a normality of 10 to 15. This solution penetrates the chitin. The alkali is preferably sodium hydroxide, potassium hydroxide or lithium hydroxide. The amount of the aqueous alkali solution is 3 to 5 times, preferably about 4 times, by weight the weight of the chitin. The temperature is preferably lower than room temperature, more preferably from 5 to 20°C.

Next, the mixture is frozen, preferably at a temperature of from −3 to −30°C, more preferably of from −10 to −20°C for preferably 3 to 24 hours. The degree of swelling the micell of chitin is determined by taking a small specimen amount and dissolving it in a small amount of an iced water to see the uniformity of the thus-obtained solution. In the case of fully swelled micell, the chitin is uniformly dispersed in the water.

Where the concentration and the amount of

the alkali are outside the above-mentioned range, the micells only partially swell and give an opaque and non-uniform solution. Thus where there is insufficient alkali, it is not possible for the alkali solution to penetrate into the particles of chitin sufficiently. On the other hand, in the case where there is too much chitin, the solution in the neighbourhood of the surface of chitin particles inhibits heat conduction during freezing and the swelling the micell of chitin. In either case, sufficient opening of the micell is not expected because the internal swelling of the micell of chitin is inhibited. Also, in cases where the concentration of alkali is low, the swelling does not occur.

In step (ii), the frozen chitin-containing alkali is dispersed in an organic solvent containing an etherifying agent which is preferably dissolved in the solvent in an amount of 1 to 3 times by mole equivalent per unit mole equivalent of the pyranose ring of chitin. The reaction is carried out at a low temperature, preferably at 0—30°C for 1 to 72 hours, more preferably for 5 to 12 hours. Since in the initial stage of the reaction, heat is generated due to neutralization, it is preferable to use external cooling to maintain the temperature at 0 to 10°C at first, and to continue the reaction thereafter at a predetermined temperature. After the reaction is over, the organic solvent is removed and the residue is dissolved in water to obtain a uniform solution. After neutralizing the solution and dialyzing the neutralized solution, the fraction containing the carboxyalkylated chitin derivative is obtained by fractional precipitation. The carboxymethylated chitin is obtained by drying the fraction. The agent used for the fractional precipitation is a mixture of an alcohol, for instance methanol or ethanol, and acetone.

The organic solvent employed in step (ii) may be methanol, ethanol, isopropyl alcohol, propanol, acetone or DMSO (dimethyl sulfoxide). In using such an organic solvent, since the hydroxyl group of chitin assumes the form of an alcoholate by the action of the alkali, there is an advantage in carrying out the carboxyalkylation next step with the chitin in that form.

The etherifying agent used in the present invention is a compound represented by the general formula:

$$X(CH_2)_nCOOH$$

wherein X represents chlorine or bromine and n denotes an integer of 1, 2 or 3. It may be chloroacetic acid, bromoacetic acid, $\beta$-chloropropionic acid, $\beta$-bromopropionic acid $\gamma$-chlorobutyric acid, or $\gamma$-bromobutyric acid. By the method of the invention, water-soluble carboxymethylated-, carboxyethylated-, carboxypropylated chitin, etc. is obtained.

The degree of carboxyalkylation obtained by the method of the present invention applied varies depending upon the reaction conditions. It is possible to obtain a degree of carboxyalkylation as high as more than 0.3, for example from 0.3 to 0.9.

Furthermore, the present invention offers a method of producing a water-soluble de-acetylated derivative of a carboxyalkylated chitin by treating the carboxyalkylated chitin with an aqueous alkali solution at a high concentration, preferably at a normality of 4 to 15, preferably at a room temperature of 65 to 150°C, more preferably of 65 to 110°C for 0.1 to 48 hours thereby de-acetylating the carboxyalkylated chitin.

As the starting material for this method of obtaining de-acetylated derivatives, the substance still containing organic solvent obtained by filtering the carboxyalkylation product in the organic solvent and then washing with ethanol and acetone, the substance obtained by drying the above-mentioned substance still containing the solvents, or the intermediate substance obtained by dissolving the residue in water after the removal of organic solvent from the carboxyalkylation product may be used.

Where the reaction temperature of de-acetylation is lower than indicated above, de-acetylation does not proceed sufficiently. It is not preferable to carry out the reaction at a higher temperature because a reduction in the molecular weight of the chitin occurs. However since the carboxyalkyl group is bonded to chitin by an ether bond this group is not released during de-acetylation when the carboxyalkylated chitin is heated in an aqueous alkali solution.

The degree of de-actylation obtained by the method of the present invention can be from 0.1 to 1, preferably from 0.3 to 1.

The water-soluble carboxyalkylated derivatives of chitin and the de-acetylated derivatives thereof obtained by the methods of the present invention can be employed as an ion-exchange substance, a raw material for edible films, dietary fibers or a bio-adaptable material.

The following Examples illustrate the present invention.

Example 1

After kneading 20 g of chitin with 65 g of an aqueous 11 N sodium hydroxide solution at a temperature of 15°C, the resulting mixture was frozen at a temperature of —20°C for 24 hours. The frozen mixture was dispersed in a solution comprising 400 ml of ethanol and 30 g of chloroacetic acid. The mixture was reacted for 2 hours at a temperature of 3°C and for a further 45 hours at a temperature of 20°C. After the reaction was over, the reaction mixture was neutralized and then dialyzed by using a visking tube. The dialyzate is subjected to fractional precipitation by ethanol to give a carboxylated chitin, at a yield of 28 g, the degree of substitution of the product being 0.6 as determined by

elementary analysis. The presence of a carboxyl group was confirmed by infrared absorption spectroscopy, and the fact that the product had not been de-acetylated was confirmed by the negativity in colouring purple when treated with iodine in the presence of sulfuric acid.

Example 2

Twenty grams of carboxymethylated chitin obtained in Example 1 were treated in 200 g of an aqueous 12.5 N sodium hydroxide solution at a temperature of 100°C for 3 hours, and the mixture was dissolved in 800 ml of water and then neutralized with 6 N hydrochloric acid. After dialyzing the neutralized reaction mixture, a precipitate deposited. The substance obtained afer washing and drying the precipitate was a de-acetylated carboxymethylated chitin weighing 15 g.

Example 3

After kneading 50 g of chitin with 200 g of an aqueous 11 N sodium hydroxide solution at a temperature of 15°C, the mixture was frozen for 2 hours at a temperature of −3°C and for a further 24 hours at a temperature of −20°C. The frozen mixture was dispersed in isopropyl alcohol containing 70 g of chloroacetic acid in solution. The dispersion was left to stand for 2 hours at a temperature of 0°C and for a further 24 hours at a temperature of 13°C to allow reaction to occur. After the reaction was over, the reaction mixture was filtered and the isopropyl alcohol was removed. The residue was then dissolved in 1,500 ml of water. After neutralization of the solution, neutralized solution was dialyzed and the carboxyalkylated chitin in the dialyzate was precipitated out by fractional precipitation of the dialyzate with ethanol, and a carboxymethylated chitin with a degree of substitution of 0.7 was obtained at a yield of 75 g.

Example 4

After kneading 50 g of chitin with 200 g of an aqueous 11 N potassium hydroxide solution at a temperature of 10°C, the mixture was frozen at a temperature of −3°C for 2 hours and for a further 24 hours at a temperature of −20°C. The frozen mixture was dispersed in a solution comprising 1000 ml of isopropyl alcohol and 79 g of $\beta$-monochloropropionic acid. The mixture was reacted for 2 hours at a temperature of 0°C and for a further 24 hours at a temperature of 15°C. After the reaction was over, the reaction mixture was filtered, dissolved in 2000 ml of water, neutralized and then dialyzed using visking tubing. The dialyzate is subjected to fractional precipitation by acetone to give a carboxyethylated chitin, at a yield of 62 g, the degree of substition of the product being 0.6.

Example 5

Twenty five grams of carboxyethylated chitin obtained in Example 4 were treated in 300 g of an aqueous 10 N potassium hydroxide solution at 95°C for 5 hours and the mixture was dissolved in 1,000 ml of water. This solution was neutralized. By condensing the neutralized solution and dialyzing the condensate a precipitate deposited. After washing and drying the precipitate, 16 g of a de-acetylated carboxyethylated chitin were obtained.

Example 6

After kneading 50 g of chitin with 200 g of an aqueous 11 N sodium hydroxide solution at a temperature of 15°C, the mixture was frozen for 24 hours at a temperature of −15°C. Then the frozen substance was dispersed in an isopropyl alcohol solution containing 88 g of $\gamma$-chlorobutyric acid. Then following the procedure of Example 4, a carboxypropylated chitin with a degree of substituion of 0.5 was obtained at a yield of 60 g.

Example 7

Twenty four grams of the carboxypropylated chitin obtained in Example 6 were treated in an aqueous 14 N sodium hydroxide solution at a temperature of 100°C for one hour, and the mixture was dissolved in 1,300 ml of water. On dialysis of the neutralized aqueous solution, a precipitate deposited. After washing and drying the precipitate, 10 g of a de-acetylated product of the carboxypropylated chitin were obtained.

Comparative Example 1

After kneading 20 g of chitin with 80 g of an aqueous 11 N sodium hydroxide solution at a temperature of 15°C, the mixture was left to stand for 24 hours at a temperature of 25°C. After dispersing the mixture into an isopropyl alcohol solution containing 30 g of chloroacetic acid and leaving to stand for 24 hours at a temperature of 25°C to allow reaction to occur, the reaction mixture was filtered. The insoluble residue was added to one liter of water. However, a uniform solution could not be obtained and insoluble matter deposited. After removing the water-insoluble matter by centrifugation, the solution containing the water-soluble matter was neutralized and was subjected to dialysis. The dialyzate was condensed to 100 ml. After fractional precipitation of the condensate, the fraction obtained was dried to give a product with a degree of substitution of 0.3 at a yield of 2 g.

Comparative Example 2

Forty grams of chitin were dispersed in 200 ml of dimethylsulfoxide. After leaving the dispersion for 2 hours, it was filtered and the residue was dispersed in 200 ml of dimethylsulfoxide again. After leaving the dispersion to stand for an additional 2 hours, the mixture was filtered and the residue was washed with ethanol and dried.

After kneading 20 g of the thus-treated chitin

with an aqueous 11 N sodium hydroxide solution at a temperature of 15°C, the mixture was left to stand for 24 hours at a temperature of 25°C and then subjected to the same procedure as in Example 3 to obtain a product with a degree of substitution of 0.4 at a yield of 6 g.

Comparative Example 3

Twenty grams of chitin were kneaded with an aqueous 5 N sodium hydroxide solution at a temperature of 15°C and the mixture was frozen for 24 hours at a temperature of —30°C and then subjected to the same treatment as in Example 3 to obtain 2 g of product with a degree of substitution of 0.3.

**Claims**

1. A method of preparing a carboxyalkylated chitin wherein chitin is contacted with a concentrated aqueous alkali solution and then reacted with a halogenoalkylcarboxylic acid or salt thereof at a low temperature, characterised by:

(i) immersing chitin in an aqueous alkali solution of a normality of from 10 to 15, the amount of said aqueous alkali solution being 3 to 5 times by weight of the amount of chitin, and freezing said aqueous alkali solution containing chitin; and

(ii) dispersing the frozen mixture obtained from step (i) in an organic solvent containing an etherifying agent of formula:

$$X(CH_2)_nCOOH$$

wherein X represents chlorine or bromine, and n denotes an integer of 1, 2 or 3, thereby to etherify hydroxyl groups of the chitin.

2. A method according to Claim 1, wherein in step (i) the amount of said aqueous alkali solution is about 4 times by weight the amount of chitin.

3. A method according to Claim 1 or 2, wherein in step (i) the temperature at which freezing is effected is from —3 to —30°C.

4. A method according to any one of the preceding claims, wherein the organic solvent in step (ii) is methanol, ethanol, isopropyl alcohol, propanol, acetone or dimethylsulfoxide.

5. A method according to any one of the preceding claims, wherein the frozen mixture is dispersed in step (ii) at a temperature of from 0 to 30°C.

6. A method of preparing a de-acetylated carboxyalkylated chitin, characterised by contacting a carboxyalkylated chitin which has been prepared by a process as claimed in any one of the preceding claims, with an aqueous alkali solution, thereby to de-acetylate said carboxyalkylated chitin.

7. A method according to Claim 6, wherein the carboxyalkylated chitin is de-acetylated at a temperature of from 65 to 150°C.

8. A method according to Claim 7, wherein the temperature is from 65 to 110°C.

9. A method according to any one of Claims 6 to 8, wherein the aqueous alkali solution has a normality of from 4 to 15.

**Patentansprüche**

1. Verfahren zum Herstellen von carboxyalkyliertem Chitin, bei dem Chitin mit einer konzentrierten wässrigen Alkalilösung in Kontakt gebracht und sodann mit einer Halogenalkylcarbonsäure oder einem Salz dieser Säure bei niedriger Temperatur zur Reaktion gebracht wird, gekennzeichnet durch:

(i) Eintauchen von Chitin in eine wässrige Alkalilösung einer Normalität von 10—15, wobei die Menge der Alkalilösung dem drei- bis fünffachen Gewicht der Chitinmenge entspricht sowie Einfrieren der chitinhaltigen wässrigen Alkalilösung; und

(ii) Dispergieren der nach Schritt (i) erhaltenen gefrorenen Mischung in einem organischen Lösungsmittel, welches ein Veretherungsreagenz der allgemeinen Formel

$$X(CH_2)_nCOOH$$

enthält, worin X Chlor oder Brom bedeutet und n einen Wert von 1; 2 oder 3 hat, wodurch Hydroxylgruppen des Chitins verethert werden.

2. Verfahren nach Anspruch 1, bei welchem in Schritt (i) die Menge an wässriger Alkalilösung vier mal dem Gewicht der Chitinmenge entspricht.

3. Verfahren nach Anspruch 1 oder 2, bei welchem in Schritt (i) die Einfriertemperatur —3 bis —30°C beträgt.

4. Verfahren nach einem der vorausgehenden Ansprüche, bei welchem das in Schritt (ii) verwendete organische Lösungsmittel Methanol, Ethanol, i-Propylalkohol, n-Propanol, Aceton oder Dimethylsulfoxid ist.

5. Verfahren nach einem der vorausgehenden Ansprüche, bei welchem in Schritt (ii) die gefrorene Mischung bei einer Temperatur von 0—30°C dispergiert wird.

6. Verfahren zum Herstellen eines deactylierten carboxyalkylierten Chitins, gekennzeichnet durch Kontaktieren eines carboxyalkylierten Chitins, welches nach einem Verfahren eines der vorausgehenden Ansprüche hergestellt wurde, mit einer wässrigen Alkalilösung, wodurch das carboxyalkylierte Chitin de-acetyliert wird.

7. Verfahren nach Anspruch 6, bei welchem das carboxyalkylierte Chitin bei einer Temperatur von 65—150°C de-acetyliert wird.

8. Verfahren nach Anspruch 7, bei welchem die Temperatur 65—110°C beträgt.

9. Verfahren nach irgendeinem der Ansprüche 6—8, bei welchem die wässrige Alkalilösung eine Normalität von 4—15 aufweist.

**Revendications**

1. Méthode de préparation d'une chitine carboxyalcoylée dans laquelle la chitine est mise en contact avec une solution concentrée aqueuse d'alcali et ensuite mise à réagir avec un acide halogénoalcoylcarboxylique ou un de ses sels, à basse température, caractérisée par:

(i) une immersion de la chitine dans une solution aqueuse d'alcali de normalité de 10 à 15, la quantité de ladite solution aqueuse d'alcali étant de 3 à 5 fois en poids la quantité de la chitine, et congélation de ladite solution aqueuse alcaline contenant la chitine; et

(ii) dispersion de mélange congelé obtenu à l'étape (i) dans un solvant organique contenant un agent éthérifiant de formule:

$$X(CH_2)_nCOOH$$

dans laquelle X représente la chlore ou le brome et n désigne le nombre entier 1, 2 ou 3, pour éthérifier ainsi les groupes hydroxy de la chitine.

2. Méthode selon la revendication 1, dans laquelle dans l'étape (i) la quantité de ladite solution aqueuse alcaline est d'environ 4 fois en poids la quantité de la chitine.

3. Methodé selon la revendication 1 ou 2, dans laquelle dans l'étape (i) la température à laquelle la congélation est effectuée est de −3 à −30°C.

4. Méthode selon l'une qualconque des revendications précédentes, dans laquelle le solvant organique de l'étape (ii) est le méthanol, l'éthanol, l'alcool isopropylique, le propanol, l'acétone ou le diméthylsulfoxide.

5. Méthode selon l'une quelconque des revendications précédentes, dans laquelle le mélange congelé est dispersé dans l'étape (ii) à une température de 0 à 30°C.

6. Méthode de préparation d'une chitine désacétylée carboxyalcoylée, caractérisée par la mise en contact d'une chitine carboxyalcoylée qui a été préparée par un procédé revendiqué dans l'une quelconque des revendications précédentes, avec une solution aqueuse d'alcali, pour désacétyler ainsi ladite chitine carboxyalcoylée.

7. Méthode selon la revendication 6, dans laquelle la chitine carboxyalcoylée est désacétylée à une température de 65 à 150°C.

8. Méthode selon la revendication 7, dans laquelle la température est de 65 à 110°C.

9. Méthode selon l'une quelconque des revendications 6 à 8, dans laquelle la solution aqueuse d'alcali a une normalité de 4 à 15.